# FASCICULE DE BREVET EUROPEEN

(11) **EP 3 445 497 B1**
(45) Date de publication et mention de la délivrance du brevet: **14.10.2020**
(21) Numéro de dépôt: 17720196.9
(22) Date de dépôt: 06.04.2017
(51) Int. Cl.: B05B 7/00, B05B 17/06, B60H 1/24, B60H 3/02

(54) **DISPOSITIF DE RAFRAICHISSEMENT D'AIR POUR VEHICULE ET INSTALLATION DE CHAUFFAGE, DE VENTILATION ET/OU DE CLIMATISATION ASSOCIEE**
LUFTKÜHLVORRICHTUNG FÜR EIN KRAFTFAHRZEUG SOWIE ZUGEHÖRIGE HEIZUNGS-, LÜFTUNGS- UND/ODER KLIMAANLAGE
AIR COOLING DEVICE FOR A VEHICLE AND ASSOCIATED HEATING, VENTILATION AND/OR AIR CONDITIONING INSTALLATION

(30) Priorité: 18.04.2016 FR 1653415
(43) Date de publication de la demande: 27.02.2019
(73) Titulaire: Valeo Systemes Thermiques, 78320 Le Mesnil Saint Denis (FR)
(72) Inventeur: LECHAT, Yvan, 78322 Le Mesnil Saint-denis Cedex (FR); FEUILLARD, Vincent, 78322 Le Mesnil Saint-denis Cedex (FR); TRUILLET, Franck, 78322 Le Mesnil Saint-denis Cedex (FR)
(74) Mandataire: Tran, Chi-Hai
(86) Numéro de dépôt international: PCT/FR2017/050822
(87) Numéro de publication internationale: WO 2017/182729

(56) Documents cités:
- FR-A1- 3 001 526
- JP-A- H0 995 127
- JP-A- H06 115 347
- JP-A- S61 181 718
- JP-A- 2009 286 244

## Description

L'invention concerne un dispositif de rafraichissement d'air pour véhicule automobile. L'invention concerne encore une installation de chauffage, de ventilation et/ou de climatisation comprenant un tel dispositif de rafraichissement d'air.

Afin d'assurer le confort thermique des passagers d'un véhicule par exemple, les véhicules automobiles intègrent le plus souvent une installation de ventilation et/ou de climatisation permettant d'établir dans l'habitacle une température inférieure à la température externe.

Ces installations de ventilation et/ou de climatisation ventilent de l'air rafraichi de sorte qu'elles apportent un confort thermique aux occupants du véhicule. Un premier inconvénient de telles installations est que l'air rafraichi est asséché. Par ailleurs, les places situées à l'arrière de l'habitacle sont souvent moins bien ventilées, de sorte qu'elles sont aussi moins bien rafraichies. Il est aussi à noter que tous les véhicules ne sont pas nécessairement munis de climatiseur.

Afin d'améliorer la situation, il est connu de nébuliser un liquide tel que de l'eau. À cet effet, une solution connue est de prévoir un dispositif de rafraichissement d'air comprenant notamment un aérateur à travers lequel circule un flux d'air, et un dispositif de nébulisation d'un liquide générant des gouttelettes en vue de les mélanger au flux d'air destiné à être envoyé vers l'habitacle du véhicule.

On connait notamment des dispositifs de nébulisation à systèmes piézoélectriques, par exemple avec des têtes de nébulisation à membrane micro-perforée ou des dispositifs utilisant le principe dit de « fontaine acoustique » basé sur le comportement d'un liquide de nébulisation soumis à un champ acoustique.

Des exemples sont divulgués dans les documents: JP2009286244, JPS61181718, FR3001526, JPH06115347 et JPH0995127.

La délivrance des gouttelettes au travers d'un aérateur permet d'augmenter l'hygrométrie de l'air présent à l'intérieur de l'habitacle et aussi de diminuer la température de cet air. En effet, les gouttelettes de liquide nébulisé, en s'évaporant, provoquent un abaissement de température du fait de la chaleur latente de vaporisation qui est alors absorbée. Ceci est transparent pour le ou les passagers du véhicule par exemple qui ne ressent(ent) que la sensation de fraicheur sans percevoir d'augmentation d'humidité.

Une telle solution permet de pallier au moins partiellement l'absence de climatiseur ou d'améliorer le rafraichissement de l'habitacle quand un tel climatiseur est présent, mais insuffisant localement. Cette solution contribue également à humidifier l'air.

Selon certaines solutions connues, deux flux d'air sont nécessaires, à savoir le flux d'air mis en mouvement de façon à être délivré dans l'habitacle du véhicule, auquel vient se mélanger un autre flux d'air chargé en gouttelettes de liquide nébulisé. C'est le mélange de ces deux flux d'air qui permet alors une fois délivré dans l'habitacle d'augmenter l'hygrométrie de l'air contenu dans l'habitacle et ainsi procurer la sensation de rafraichissement aux occupants du véhicule.

Par ailleurs, il est connu de disposer différents aérateurs dans les véhicules, notamment à l'avant, ou à proximité des passagers à l'arrière, que ce soit au niveau des montants latéraux entre portes, ou encore au niveau de la console centrale ou parfois du pavillon. La gestion des débits et températures d'air pour chaque aérateur permet d'apporter des conditions locales agréables pour chaque passager.

Cependant, les dispositifs de rafraichissement d'air connus avec nébulisation d'un liquide ne permettent pas d'ajuster de façon indépendante le volume de liquide nébulisé pour chaque passager.

L'invention a donc pour objectif de pallier au moins partiellement ces problèmes de l'art antérieur en proposant une alternative simple d'un dispositif de rafraichissement d'air permettant d'offrir une nébulisation avec un volume de liquide nébulisé réglable pour chacune des sorties d'air reliées à un aérateur dans l'habitacle en fonction de ce que souhaitent les occupants du véhicule.

À cet effet, l'invention a pour objet un dispositif de rafraichissement d'air selon la revendication 1.

Cela permet d'ajuster le volume du flux d'air chargé en gouttelettes de liquide à destination de chaque sortie d'air.

Le dispositif de rafraichissement d'air selon l'invention peut en outre comporter une ou plusieurs des caractéristiques suivantes prises seules ou en combinaison :
- l'organe de régulation de nébulisation est agencé en aval du dispositif de nébulisation selon le sens d'écoulement du flux d'air chargé en gouttelettes de liquide nébulisé ;
- le dispositif de rafraichissement d'air comprend au moins deux premières canalisations formant les canalisations de nébulisation destinées à être parcourues par un premier flux d'air, et au moins deux deuxièmes canalisations respectivement destinées à être parcourues par un deuxième flux d'air distinct du premier flux d'air, chaque deuxième canalisation étant associée à une première canalisation respective et étant agencée en communication fluidique avec une sortie d'air respective ;
- chaque première canalisation est disposée au moins partiellement à l'intérieur d'une deuxième canalisation associée ;
- le premier flux d'air et le deuxième flux d'air sont destinés à être mis en mouvement par un organe de propulsion d'air commun du dispositif de rafraichissement d'air ou d'une installation de chauffage, de ventilation et/ou de climatisation configurée pour équiper ledit véhicule ;
- le dispositif de rafraichissement d'air comporte au moins un volet de distribution d'air agencé mobile de manière à répartir le débit d'air entre le premier flux d'air et le deuxième flux d'air ;
- le dispositif de rafraichissement d'air comprend un conduit d'entrainement d'un flux d'air, le conduit d'entrainement présentant une première ramification se divisant en au moins deux premières canalisations, et une deuxième ramification se divisant en au moins deux deuxièmes canalisations ;
- le volet de distribution d'air est agencé entre la première ramification et la deuxième ramification du conduit d'entrainement, de manière à répartir le premier flux d'air à destination des premières canalisations via la première ramification et le deuxième flux d'air à destination des deuxièmes canalisations via la deuxième ramification ;
- le dispositif de rafraichissement d'air comporte un volet supplémentaire de répartition d'air agencé mobile à la jonction entre les deux deuxièmes canalisations entre deux positions extrêmes de fermeture de l'une ou l'autre des deuxièmes canalisations, de manière à répartir le deuxième flux d'air circulant dans la deuxième ramification entre les deuxièmes canalisations respectivement associées à une sortie d'air distincte.

L'invention concerne également une installation de chauffage, de ventilation et/ou de climatisation comprenant un dispositif de rafraichissement tel que défini précédemment.

D'autres caractéristiques et avantages de l'invention apparaitront plus clairement à la lecture de la description suivante, donnée à titre d'exemple illustratif et non limitatif, et des figures annexées parmi lesquelles :
- la figure 1 est une vue en perspective d'un dispositif de rafraichissement selon un premier mode de réalisation, qui n'appartient pas à l'invention ;
- la figure 2a est une première vue en coupe du dispositif de rafraichissement de la figure 1 montrant un volet de répartition dans une position fermée dans une canalisation de nébulisation,
- la figure 2b est une deuxième vue en coupe du dispositif de rafraichissement de la figure 1 montrant le volet de répartition dans une position ouverte,
- la figure 3 est une vue en perspective d'un dispositif de rafraichissement selon un deuxième mode de réalisation, qui n'appartient pas à l'invention ;
- la figure 4a est une première vue en coupe du dispositif de rafraichissement de la figure 3 montrant un volet de répartition dans une position fermée dans une canalisation de nébulisation et un volet de distribution d'air dans une position extrême bloquant le passage du flux d'air vers la canalisation de nébulisation,
- la figure 4b est une deuxième vue en coupe du dispositif de rafraichissement de la figure 3 montrant le volet de répartition dans une position ouverte et le volet de distribution d'air dans une position intermédiaire,
- la figure 4c est une troisième vue en coupe du dispositif de rafraichissement de la figure 3 montrant le volet de répartition et le volet de distribution d'air dans des positions fermées bloquant le passage de tout flux d'air, et
- la figure 5 est une vue en perspective d'un dispositif de rafraichissement selon un troisième mode de réalisation.

Dans la description, des éléments identiques sont identifiés par les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent uniquement à un seul mode de réalisation. De simples caractéristiques de différents modes de réalisation peuvent également être combinées ou interchangées pour fournir d'autres réalisations.

Dans la description, on peut indexer certains éléments, comme par exemple premier élément ou deuxième élément. Dans ce cas, il s'agit d'un simple indexage pour différencier et dénommer des éléments proches mais non identiques. Cette indexation n'implique pas une priorité d'un élément par rapport à un autre et on peut aisément interchanger de telles dénominations sans sortir du cadre de la présente description. Cette indexation n'implique pas non plus un ordre dans le temps.

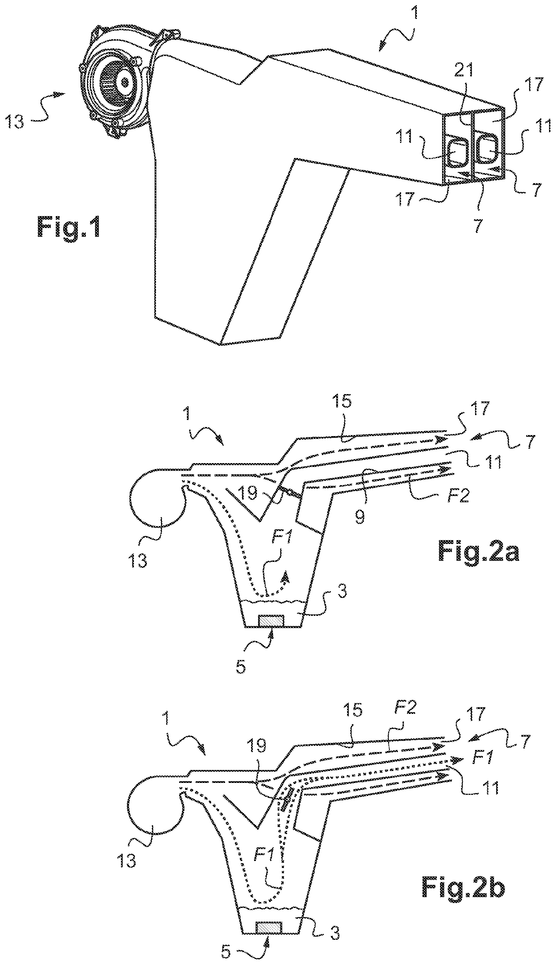

En référence aux figures 1 à 5, l'invention concerne un dispositif de rafraichissement 1 d'un flux d'air, pour véhicule automobile, permettant de rafraichir l'air contenu à l'intérieur d'un habitacle d'un véhicule automobile. Le dispositif de rafraichissement 1 est destiné à augmenter l'hygrométrie de l'air présent à l'intérieur de l'habitacle et aussi diminuer la température de l'air. Pour cela, le dispositif de rafraichissement 1 est configuré pour nébuliser un liquide, dit liquide de nébulisation, et distribuer des microgouttes ou gouttelettes de liquide nébulisé vers l'habitacle.

À cet effet, comme cela est mieux visible sur les figures 2a, 2b, 4a à 4c et 5, le dispositif de rafraichissement 1 comprend au moins une réserve 3 de liquide, dit liquide de nébulisation, tel que de l'eau ou analogue, et au moins un dispositif de nébulisation 5 de gouttelettes à partir du liquide de nébulisation.

Le dispositif de nébulisation 5 est par exemple un système piézoélectrique qui est apte à faire vibrer une surface supérieure du liquide, qui est la surface en contact avec l'air, pour générer de telles gouttelettes. À cet effet, le dispositif de nébulisation 5 comporte au moins un transducteur piézoélectrique (non représenté) configuré pour générer des ondes acoustiques, notamment ultrasonores. Cette technologie aussi nommée « fontaine acoustique » est basée sur la focalisation d'une onde acoustique à la surface d'un liquide. Si l'intensité acoustique est suffisante, il se forme une fontaine acoustique à la surface de laquelle se développe un nuage de gouttelettes. On parle également de dispositif de nébulisation à ultrasons. Le dispositif de nébulisation 5 peut être immergé ou non dans le liquide de nébulisation contenu dans la réserve 3. Bien entendu, d'autres alternatives de dispositif de nébulisation peuvent être envisagées.

Le dispositif de rafraichissement 1 comporte en outre plusieurs sorties d'air 7, notamment au moins deux sorties d'air 7 respectivement configurées pour la diffusion d'au moins un flux d'air, de préférence à destination d'une zone ou partie différente de l'habitacle du véhicule.

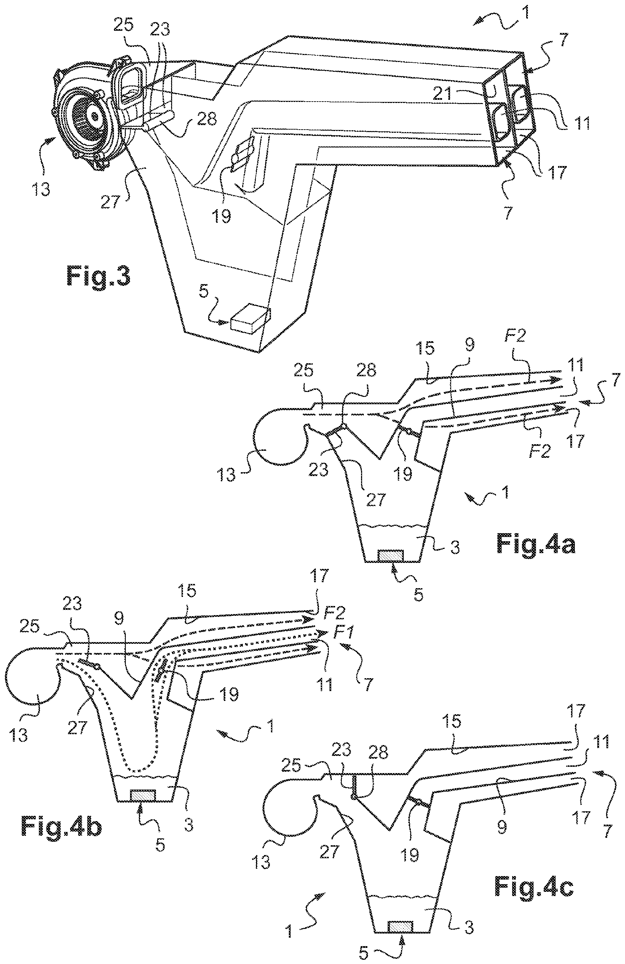

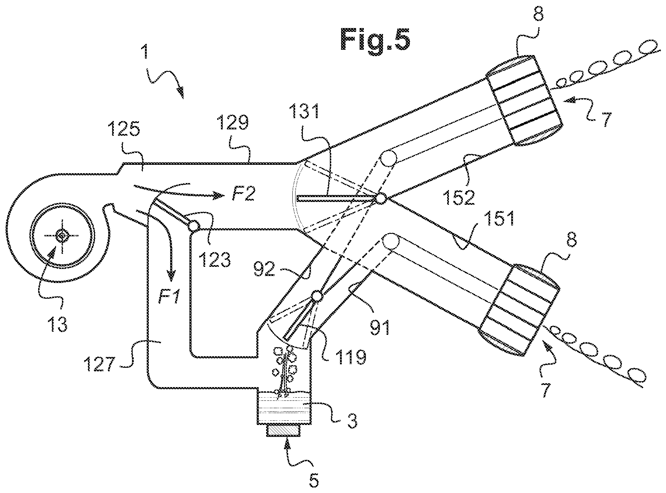

Dans l'exemple illustré sur les figures 1, 3 et 5, le dispositif de rafraichissement 1 comporte deux sorties d'air 7. Chaque sortie d'air 7 du dispositif de rafraichissement 1 est en communication aéraulique avec un aérateur 8 (non représenté sur les figures 1 et 3). Deux aérateurs 8 sont représentés de façon schématique sur la figure 5. Un aérateur 8 peut être indifféremment intégré à une console avant d'un tableau de bord du véhicule automobile ou à une console centrale interposée entre des sièges du véhicule automobile ou à tout autre élément structurel contenu à l'intérieur de l'habitacle du véhicule automobile. De préférence les différents aérateurs 8 sont agencés dans des endroits distincts de l'habitacle. Cela permet de dissocier le rafraichissement de l'air selon la zone de l'habitacle concernée dans laquelle un aérateur 8 est agencé, par exemple les zones gauche / droite et/ou avant / arrière. Afin de diffuser le ou les flux d'air dans l'habitacle du véhicule, chaque aérateur 8 présente au moins une ouverture (non visible sur les figures). Cette ouverture peut recevoir un élément au moins partiellement ajouré tel qu'une grille d'aération (non représentée).

De plus, en se référant aux figures 2b, 4b et 5, au moins un premier flux d'air *F1* est destiné à se charger en gouttelettes de liquide nébulisé avant d'être délivré dans l'habitacle. Les gouttelettes de liquide nébulisé sont donc mélangées au premier flux d'air *F1* à destination de l'habitacle de manière à former un brouillard qui sera délivré dans l'habitacle. Lorsque le premier flux d'air *F1* est chargé en gouttelettes de liquide nébulisé, on parle également de flux de nébulisation *F1.*

Pour ce faire, le dispositif de rafraichissement d'air 1 comprend au moins une première canalisation 9 (figures 1 à 4c) ; 91, 92 (figure 5), dite canalisation de nébulisation, agencée en communication fluidique avec la réserve 3 et une sortie d'air 7 associée, et destinée à être parcourue par le premier flux d'air *F1* chargé en gouttelettes de liquide nébulisé.

En particulier, le dispositif de rafraichissement d'air 1 comporte au moins une première canalisation 9 ; 91, 92 pour chaque sortie d'air 7. En référence aux figures 1, 3 et 5, le dispositif de rafraichissement 1 comporte deux canalisations de nébulisation 9 ou 91 et 92. Comme schématisé sur les figures 2b, 4b et 5, chaque canalisation de nébulisation 9 ; 91, 92 est respectivement destinée à être parcourue par un flux d'air *F1* qui s'est chargé en gouttelettes de liquide nébulisé. À cet effet, chaque canalisation de nébulisation 9 ; 91, 92 est agencée en communication fluidique avec la réserve 3 de liquide et une sortie d'air 7 associée.

Comme cela est schématisé sur les figures 2a à 2b, 4a à 4c et 5, la réserve 3 de liquide de nébulisation peut être agencée de manière à permettre un écoulement ascendant du premier flux d'air *F1* entre la réserve 3 et une sortie d'air 7 associée. La réserve 3 est ainsi raccordée à une ou chaque première canalisation 9 ; 91, 92 qui surplombe préférentiellement la réserve 3. Autrement dit, la ou chaque première canalisation 9 ; 91, 92 s'étend au moins en partie au-dessus de la réserve 3, selon une direction verticale, en référence à la disposition des éléments sur les figures 1 à 5, correspondant généralement à l'agencement une fois monté dans le véhicule automobile. On peut prévoir une seule réserve 3 et un seul dispositif de nébulisation 5 pour l'ensemble des sorties d'air 7 ou en variante une pluralité de réserves 3 et de dispositifs de nébulisation 5.

En outre, comme cela est mieux visible sur les figures 1 à 4c, chaque première canalisation 9 ; 91, 92 se termine par une embouchure 11 configurée pour être en communication aéraulique avec au moins une première bouche de délivrance de l'aérateur 8 (non représenté sur les figures 1 à 4c) débouchant dans l'habitacle. Le premier flux d'air *F1* chargé en gouttelettes de liquide nébulisé peut ainsi être expulsé à travers la première bouche de délivrance de l'aérateur 8, de façon à permettre une ré-humidification de l'air contenu dans l'habitacle du véhicule. À titre d'exemple non limitatif, l'embouchure 11 de la première canalisation 9 peut présenter un diamètre de l'ordre de 10 à 25mm.

Par ailleurs, un organe de propulsion d'air 13 permet de mettre en mouvement le premier flux d'air *F1.*

Selon une variante de réalisation, le dispositif de rafraichissement d'air 1 peut comporter son propre organe de propulsion 13 tel qu'un ventilateur, couramment appelé pulseur, permettant de mettre en mouvement le premier flux d'air *F1.* Selon cette variante, l'organe de propulsion d'air commun 13 fait donc partie du dispositif de rafraichissement 1.

Alternativement, le dispositif de rafraichissement d'air 1 est par exemple relié à un réseau de ventilation d'une installation de chauffage, de ventilation et/ou de climatisation existante dans le véhicule automobile. Dans ce cas, l'organe de propulsion d'air permettant de mettre en mouvement le premier flux d'air *F1* est un organe de propulsion d'air, tel que le groupe moto-ventilateur, de l'installation de chauffage, de ventilation et/ou de climatisation équipant le véhicule.

Le dispositif de rafraichissement d'air 1 peut comprendre de plus pour chaque sortie d'air 7, une deuxième canalisation 15 ; 151, 152 en communication aéraulique avec la sortie d'air 7 associée et destinée à être parcourue par un deuxième flux d'air *F2* à destination de l'habitacle. Ce deuxième flux d'air *F2*, aussi appelé flux d'air principal, est distinct du premier flux d'air *F1.*

Selon l'exemple illustré sur les figures 1, 3 et 5, le dispositif de rafraichissement 1 comporte deux deuxièmes canalisations 15 ou 151 et 152. Chaque deuxième canalisation 15 ; 151, 152 est associée à une première canalisation 9 ; 91, 92 respective et est agencée en communication fluidique avec une sortie d'air 7 respective.

Comme cela est mieux visible sur les figures 1 à 4c, chaque deuxième canalisation 15 ; 151, 152 se termine par une embouchure 17 destinée à être en communication aéraulique avec au moins une deuxième bouche de délivrance de l'aérateur 8 (non représenté sur les figures 1 à 4c) à travers laquelle passe le deuxième flux d'air *F2* afin de déboucher dans l'habitacle. À titre d'exemple non limitatif, l'embouchure 17 de la deuxième canalisation 15 ; 151, 152 peut présenter un diamètre de l'ordre de 60mm.

De façon préférée, chaque première canalisation 9 ; 91, 92 s'étend au moins partiellement à l'intérieur d'une deuxième canalisation 15 ; 151, 152 associée, notamment au centre de celle-ci. Chaque embouchure 11 d'une première canalisation 9 ; 91, 92 est alors entourée par l'embouchure 17 de la deuxième canalisation 15 ; 151, 152 associée, et notamment ménagée au centre de celle-ci. Chaque première canalisation 9 ; 91, 92 isole ainsi le premier flux d'air *F1* du deuxième flux d'air *F2,* et ceux-ci ne sont mélangés qu'après avoir franchis la sortie d'air 7 associée. Autrement dit, les flux d'air *F1* et *F2* sont mélangés en sortie du dispositif de rafraichissement d'air 1, pour augmenter l'hygrométrie de l'air présent à l'intérieur de l'habitacle et diminuer la température de cet air. Une telle configuration est avantageuse en termes de confort ressenti par l'utilisateur. En effet, il a été constaté que si les flux d'air *F1* et *F2* cheminent dans un conduit commun avant délivrance dans l'habitacle, il en résulte un phénomène de condensation des gouttelettes de liquide nébulisé sur les parois internes du conduit commun. L'eau condensée entraine un risque de prolifération de bactéries voire d'algues dans le conduit, et/ou d'odeurs nauséabondes, qui peuvent engendrer un inconfort pour les occupants par exemple de l'habitacle du véhicule, et qui peut nécessiter la mise en œuvre d'un assainissement du flux d'air. Le mélange du premier flux d'air *F1* chargé en gouttelettes de liquide nébulisé au deuxième flux d'air *F2*, aussi appelé flux d'air principal, en aval de la ou chaque sortie d'air 7 selon le sens d'écoulement du flux d'air permet d'éviter une telle condensation.

Par ailleurs, un organe de propulsion d'air 13 permet de mettre en mouvement le deuxième flux d'air *F2.*

Avantageusement, le premier flux d'air *F1* et le deuxième flux d'air *F2* sont destinés à être mis en mouvement par un organe de propulsion d'air commun 13. Autrement dit, un seul et unique organe de propulsion 13 met en mouvement un flux d'air qui est ensuite séparé de façon à former le premier flux d'air *F1* et le deuxième flux d'air *F2*. En utilisant un seul organe de propulsion 13 ou pulseur pour mettre en mouvement le premier flux d'air *F1* et le deuxième flux d'air *F2* principal à destination de l'habitacle, on obtient un dispositif de rafraichissement d'air 1 avec un encombrement réduit. En outre, la mise en route d'un unique organe de propulsion 13 permet de réduire la consommation électrique.

Selon une variante de réalisation, le dispositif de rafraichissement d'air 1 peut comporter son propre organe de propulsion tel qu'un ventilateur, couramment appelé pulseur, permettant de mettre en mouvement le flux d'air destiné à être réparti entre le premier flux d'air *F1* et le deuxième flux d'air *F2.* Selon cette variante, l'organe de propulsion d'air commun 13 fait donc partie du dispositif de rafraichissement 1.

Alternativement, le dispositif de rafraichissement d'air 1 est par exemple relié à un réseau de ventilation d'une installation de chauffage, de ventilation et/ou de climatisation existante dans le véhicule automobile. Dans ce cas, l'organe de propulsion d'air commun 13 est un organe de propulsion d'air, tel que le groupe moto-ventilateur, de l'installation de chauffage, de ventilation et/ou de climatisation équipant le véhicule.

Selon un mode de réalisation non représenté, le premier flux d'air *F1* et le deuxième flux d'air *F2* peuvent être destinés à être mis en mouvement par des organes de propulsion d'air distincts. Chaque organe de propulsion peut appartenir au dispositif de rafraichissement d'air ou à l'installation de chauffage, de ventilation et/ou de climatisation configurée pour équiper le véhicule. À titre d'exemple, le deuxième flux d'air *F2* peut être destiné à être mis en mouvement par l'organe de propulsion 13 faisant partie du dispositif de rafraichissement d'air 1, tandis que le premier flux d'air *F1* peut être destiné à être mis en mouvement par un organe de propulsion (non représenté) distinct et indépendant de l'organe de propulsion 13. L'organe de propulsion d'air permettant de mettre en mouvement le premier flux d'air *F1* peut par exemple être un organe de propulsion d'air, tel que le groupe moto-ventilateur, de l'installation de chauffage, de ventilation et/ou de climatisation équipant le véhicule.

Avantageusement, le dispositif de rafraichissement d'air 1 comporte en outre au moins un organe de régulation de nébulisation 19 (figures 1 à 4c), 119 (figure 5) configuré pour réguler le débit du premier flux d'air *F1* destiné à parcourir une canalisation de nébulisation 15 associée à une sortie d'air 7 et destiné à être diffusé à travers la sortie d'air 7 associée. Cela permet une gestion différente de la nébulisation par exemple selon le côté droit ou gauche et/ou selon la zone avant ou arrière de l'habitacle du véhicule. Ainsi, en fonction de la zone de l'habitacle dans laquelle il est situé, un occupant du véhicule peut adapter le débit du flux de nébulisation *F1*, selon ses besoins.

Selon les exemples illustrés sur les figures 1 à 5, le ou les organes de régulation de nébulisation 119 ; 119 sont agencés en aval du dispositif de nébulisation 5 selon le sens d'écoulement du premier flux d'air *F1.* Cela permet de réguler le débit du premier flux d'air *F1* une fois chargé en gouttelettes de liquide nébulisé.

L'organe ou chaque organe de régulation de nébulisation 19 ; 119 est par exemple réalisé sous la forme d'un volet de répartition 19 ; 119. Le ou les volets de répartition 19 ; 119 peuvent être de tout type, par exemple de type drapeau, tambour, ou encore papillon.

Chaque volet de répartition 19 ; 119 peut être entrainé en déplacement de façon manuelle sous l'action d'un utilisateur, par exemple à l'aide d'une molette prévue dans l'habitacle. En particulier, la position du volet de répartition 19 ; 119 est déterminée en fonction du débit de liquide nébulisé demandé par l'utilisateur. La gestion du positionnement de chaque volet 19 ; 119 permet d'adapter le flux de nébulisation par exemple selon le côté droit ou gauche de l'habitacle du véhicule, en fonction de facteurs influant sur le confort thermique des occupants, comme par exemple une exposition directe au soleil seulement d'un des côtés de l'habitacle.

En alternative ou en complément, le dispositif de rafraichissement d'air 1 peut comprendre au moins un actionneur (non représenté), plus précisément un actionneur électrique, configuré pour commander le déplacement du volet de répartition 19 ; 119 de façon au moins partiellement automatique. Bien entendu, on peut combiner la possibilité d'un pilotage manuel et automatique de la position du volet de répartition 19 ; 119.

Afin d'automatiser le pilotage de la position des volets de répartition 19 ; 119 le dispositif de rafraichissement d'air 1 peut comporter au moins un dispositif de commande (non représenté) de l'actionneur comprenant au moins un moyen de traitement pour déterminer l'agencement de chaque volet de répartition 19 ; 119 en fonction de conditions thermiques et/ou de climat. On entend par conditions thermiques, des paramètres influant sur le confort thermique ressenti par un ou plusieurs occupants de l'habitacle du véhicule. À titre d'exemple non limitatif, il peut s'agir de données de températures de l'intérieur de l'habitacle et/ou encore d'un taux d'hygrométrie à l'intérieur de l'habitacle, ou tout autre élément ou paramètre informant sur l'environnement thermique de l'habitacle du véhicule. De façon similaire, on entend par conditions de climat ou conditions climatiques, des paramètres pouvant influer sur le confort ressenti par le ou les occupants à l'intérieur du véhicule, tel qu'un ensoleillement ou flux solaire qui par radiation à travers une vitre du véhicule peut augmenter l'inconfort thermique d'un occupant.

Dans ce cas, au moins un moyen de traitement peut détecter un facteur d'inconfort thermique, déterminer en conséquence la position du ou de chaque volet de répartition 19 ; 119 à adopter, et commander l'actionneur pour qu'il déplace le ou chaque volet de répartition 19 ; 119 dans la position déterminée.

### Premier mode de réalisation

On décrit maintenant en référence aux figures 1 à 2b, un premier mode de réalisation qui n'appartient pas à l'invention.

Selon ce premier mode de réalisation qui n'appartient pas à l'invention, au moins un volet de répartition 19 est agencé à l'intérieur d'une canalisation de nébulisation 9 associée, de façon mobile entre :
- au moins une position de fermeture (voir figure 2a) bloquant le premier flux d'air *F1* et
- une pluralité de positions dites ouvertes (une position ouverte est représentée sur la figure 2b) permettant d'ajuster le débit du flux d'air *F1* chargé en gouttelettes de liquide nébulisé à destination d'une sortie d'air 7 associée respective.

On prévoit notamment au moins autant de volets de répartition 19 qu'il y a de sorties d'air 7 distinctes. Plus précisément, selon ce premier mode de réalisation, on agence au moins un volet de répartition 19 dans chaque canalisation de nébulisation 9 associée à une sortie d'air 7. Les volets de répartition 19 sont respectivement configurés pour réguler le débit du flux d'air *F1* chargé en gouttelettes de liquide nébulisé de façon indépendante pour chaque canalisation de nébulisation 9.

En outre, selon ce premier mode de réalisation le dispositif de rafraichissement d'air 1 comprend une cloison de séparation 21 étanche agencée entre deux deuxièmes canalisations 15 enveloppant une première canalisation 9 de nébulisation associée. Dans ce cas, un volet de répartition 19 peut être agencé dans chaque première canalisation 9 qui se trouve de chaque côté de la cloison de séparation 21.

Avantageusement, chaque volet de répartition 19 est agencé dans une partie de première canalisation 9 associée qui surplombe la réserve 3 en référence à la disposition des éléments telle que schématisée sur les figures 1 à 2b.

Selon ce premier mode de réalisation, comme dit précédemment la gestion de la position de chaque volet de répartition 19 peut se faire de façon manuelle et/ou automatique. Ainsi, pour une sortie d'air 7 donnée, le débit du flux de nébulisation *F1* peut être géré de façon indépendante par rapport aux autres sorties d'air 7, à l'aide du volet de répartition 19 associé.

Selon ce premier mode de réalisation, la gestion du flux de nébulisation *F1* pour cette sortie d'air 7 n'a pas d'influence sur les flux de nébulisation associés aux autres sorties d'air 7 en communication aéraulique avec des aérateurs 8 agencés dans une autre zone de l'habitacle par exemple de l'autre côté du véhicule. En effet, le déplacement du volet de répartition 19 associé à une sortie d'air 7 donnée n'entraine pas de conséquence quant à la position d'un autre volet de répartition 19 associé à une autre sortie d'air 7. Bien entendu, pour cela la cloison de séparation 21 est complètement étanche.

### Deuxième mode de réalisation

Un deuxième mode de réalisation est illustré sur les figures 3 à 4c, deuxième mode qui n'appartient pas à l'invention. La description du premier mode de réalisation en référence aux figures 1 à 2b s'applique aux composants identiques. Les différences entre les premier et deuxième modes de réalisation sont maintenant décrites.

Contrairement au premier mode de réalisation dans lequel la même quantité d'air s'écoule dans les premières canalisations 9 ou dans les deuxièmes canalisations 15 quelle que soit la position du volet de répartition 19, le dispositif de rafraichissement d'air 1 selon le deuxième mode de réalisation permet de réguler la quantité d'air circulant dans les première 9 et deuxième 15 canalisations associée à une zone donnée dans l'habitacle sans affecter, voire en modifiant d'autre part ou en maintenant constante, la quantité d'air circulant dans les première 9 et deuxième 15 canalisations associée à une autre zone de l'habitacle.

Plus précisément, selon ce deuxième mode de réalisation, le dispositif de rafraichissement 1 est configuré pour répartir, de façon différente pour chaque sortie d'air 7, et donc pour chaque aérateur 8 (non représenté sur les figures 3 à 4c), le débit d'air du premier flux d'air *F1* destiné à circuler dans la première canalisation 9 associée et du deuxième flux d'air *F2* destiné à circuler dans la deuxième canalisation 15 associée.

Pour ce faire, selon le deuxième mode de réalisation, le dispositif de rafraichissement 1 comporte au moins un volet de distribution d'air 23 permettant de séparer le flux d'air mis en mouvement par l'organe de propulsion commun 13.

Le ou les volets de distribution d'air 23 sont ici agencés en amont du dispositif de nébulisation 5 selon le sens d'écoulement du premier flux d'air *F1.* La distribution entre le premier flux d'air *F1* et le deuxième flux d'air *F2* se fait donc avant nébulisation, c'est-à-dire avant que le premier flux d'air *F1* se charge en gouttelettes de liquide nébulisé. rafraichissement 1 comprend au moins deux volets de distribution d'air 23 agencés de part et d'autre de la cloison de séparation 21. Chaque volet de distribution d'air 23 est ici associé à une sortie d'air 7 respective, et donc à un aérateur 8 propre (non représenté sur les figures 3 à 4c) débouchant dans l'habitacle.

Plus précisément, chaque volet de distribution d'air 23 est agencé de manière à répartir pour une sortie d'air 7 associée, le débit d'air entre le premier flux d'air *F1* destiné à circuler dans la première canalisation 9 et le deuxième flux d'air *F2* destiné à circuler dans la deuxième canalisation 15.

Généralement le premier flux d'air *F1* présente un plus petit débit d'air que le deuxième flux d'air *F2.* À titre d'exemple non limitatif, le débit d'air du premier flux d'air *F1* peut être de l'ordre 4kg/h. Le débit d'air du deuxième flux d'air *F2* est par exemple de l'ordre de 30 à 65 kg/h, de préférence de l'ordre de 40 kg/h. Selon un exemple de réalisation, il existe, entre les débits d'air du deuxième *F2* et du premier *F1* flux d'air, un ratio de l'ordre de 6 à 10, de préférence de l'ordre de 8. À titre d'exemple non limitatif, la vitesse d'écoulement du deuxième flux d'air *F2* peut être comprise entre 7m/s et 10 m/s, et est de préférence de l'ordre de 7 m/s.

Le ou les volets de distribution d'air 23 peuvent être de tout type permettant de séparer deux flux d'air, par exemple tel qu'un volet drapeau, un volet tambour, ou encore un volet papillon.

Dans l'exemple illustré, les deux volets de distribution d'air 23 sont agencés de façon mobile. Plus précisément, chaque volet de distribution d'air 23 peut prendre différentes positions permettant de bloquer au moins partiellement le premier *F1* ou le deuxième *F2* flux d'air. Autrement dit, chaque volet de distribution d'air 23 est mobile entre deux positions extrêmes, une première position extrême (montrée sur la figure 4a) bloquant le premier flux d'air *F1* et une deuxième position extrême (montrée sur la figure 4c) dans laquelle le volet de distribution d'air 23 est apte à bloquer le deuxième flux d'air *F2,* en passant par au moins une position ouverte intermédiaire telle qu'illustrée sur la figure 4b.

Avantageusement, le dispositif de rafraichissement d'air 1 comporte également au moins un volet de répartition 19 agencé mobile à l'intérieur d'une canalisation de nébulisation 9 associée, tel que décrit en référence au premier mode de réalisation.

Le choix de la position du volet de distribution d'air 23 et du volet de répartition 19 permet à la fois :
- de gérer le volume d'air à répartir entre le deuxième flux d'air *F2* et le premier flux d'air *F1*, et
- une fois cette répartition faite, de gérer le débit du premier flux d'air *F1* lorsqu'il est chargé en gouttelettes de liquide nébulisé, dit flux de nébulisation.

Selon l'exemple illustré sur la figure 4a, pour une sortie d'air 7 donnée, le volet de répartition 19 est dans la position de fermeture du canal de nébulisation 9 lorsque le volet de distribution d'air 23 est dans la première position bloquant le premier flux d'air *F1.* Dans cette première position extrême illustrée sur la figure 4a, seul le deuxième flux d'air *F2* est délivré dans l'habitacle de sorte qu'il n'y a pas de gouttelettes de liquide nébulisé expulsées à travers la sortie d'air 7.

En référence à la figure 4b, le volet de distribution d'air 23 et le volet de répartition 19 associés à une sortie d'air 7 donnée peuvent être tous deux agencés dans une position intermédiaire permettant d'une part de répartir le débit d'air pour le premier flux d'air *F1* destiné à circuler dans la première canalisation 9 et le deuxième flux d'air *F2* destiné à circuler dans la deuxième canalisation 15, et d'autre part de réguler le débit du premier flux d'air *F1* chargé en gouttelettes de liquide nébulisé.

Enfin, pour une sortie d'air 7 donnée, un volet de distribution d'air 23 est en pratique agencé dans la deuxième position extrême bloquant complètement le deuxième flux d'air *F2* lorsque le premier flux d'air *F1* est également bloqué par l'agencement du volet de répartition 19 dans la position de fermeture (voir figure 4c). Dans ce cas, il n'y a pas d'air diffusé vers l'habitacle à travers l'aérateur 8 (non représenté sur la figure 4c) associé à cette sortie d'air 7.

Par ailleurs, le dispositif de rafraichissement 1 peut comporter un conduit d'entrainement d'air 25 raccordé à l'organe de propulsion commun 13. Selon l'exemple illustré sur les figures 3 à 4c, ce conduit d'entrainement d'air 25 est en communication aéraulique avec les premières canalisations 9 et les deuxièmes canalisations 15. Plus précisément dans cet exemple, le conduit d'entrainement d'air 25 débouche d'une part sur les deuxièmes canalisations 15 et d'autre part sur des conduits d'acheminement 27 débouchant chacun sur une première canalisation 9 associée. Chaque conduit d'acheminement 27 est donc agencé de manière à mettre en communication aéraulique le conduit d'entrainement d'air 25, et une première canalisation 9 associée.

La cloison de séparation étanche 21 débute dans l'exemple illustré à la jonction entre le conduit d'entrainement d'air 25, les conduits d'acheminement 27 et les deuxièmes canalisations 15 de façon à dissocier les flux d'air à destination de chaque sortie d'air 7.

Chaque volet de distribution d'air 23 est alors agencé de façon à être :
- agencé entre le conduit d'entrainement d'air 25 et un conduit d'acheminement 27 dans la première position extrême illustrée sur la figure 4a, et à être
- agencé entre le conduit d'entrainement d'air 25 et une deuxième canalisation 15 dans la deuxième position extrême illustrée sur la figure 4c.

Les volets de distribution d'air 23 sont, dans l'exemple illustré sur les figures 3 à 4c, respectivement articulés autour d'un axe de pivotement 28. L'axe de pivotement 28 est ici agencé à la jonction entre :
- le conduit d'entrainement 25, et
- un conduit d'acheminement 27 et une deuxième canalisation 15, ces deux derniers éléments étant associés à une sortie d'air 7 donnée.

En particulier, la position des volets 19 et 23 est déterminée en fonction du débit d'air et du débit de liquide nébulisé demandés par l'utilisateur.

Le ou les volets 19 et/ou 23 peuvent être entrainés en déplacement de façon manuelle sous l'action d'un utilisateur, et/ou de façon au moins partiellement automatique à l'aide d'au moins un actionneur (non représenté). Comme décrit précédemment, on peut prévoir au moins un dispositif de commande (non représenté) de l'actionneur comprenant au moins un moyen de traitement pour déterminer l'agencement des volets 19 et 23 en fonction de conditions thermiques et/ou de climat.

La gestion du positionnement des volets 19 et/ou 23 est intéressante notamment pour avoir une répartition différente selon le côté droit ou gauche de l'habitacle du véhicule, en fonction de facteurs influant sur le confort thermique des occupants, comme par exemple une exposition directe au soleil seulement d'un des côtés de l'habitacle.

À titre d'exemple non limitatif, si seuls les occupants dans une zone de l'habitacle, par exemple à droite ou à gauche, sont soumis à un évènement augmentant leur inconfort thermique, par exemple s'ils sont exposés à un flux solaire, dans ce cas pour le ou les aérateurs 8 agencés de ce côté en particulier, la répartition entre le premier flux d'air *F1* et le deuxième flux d'air *F2* peut être gérée de façon indépendante à l'aide des volets de distribution d'air 23. En variante ou en complément, le débit du flux de nébulisation *F1* peut être géré de façon indépendante pour chaque aérateur 8 à l'aide des volets de répartition 19. Bien entendu, cette gestion n'a pas d'influence sur la gestion des flux d'air *F1, F2* pour les autres aérateurs 8 agencés dans une autre zone de l'habitacle par exemple de l'autre côté du véhicule.

Dans ce cas, au moins un moyen de traitement peut, pour une sortie d'air 7 donnée :
- déterminer du fait de cet ensoleillement que la répartition entre le premier flux d'air *F1* et le deuxième flux d'air *F2* doit être modifiée, et/ou que le débit du flux d'air *F1* chargé en gouttelettes de liquide nébulisé doit être modifié, et
- déterminer en conséquence la position du volet de distribution d'air 23 et/ou la position du volet de répartition 19 à adopter,
- et commander l'actionneur pour qu'il déplace le volet de distribution d'air 23 et/ou le volet de répartition 19 dans la position déterminée.

Selon ce deuxième mode de réalisation, le déplacement du volet de distribution d'air 23 n'entraine pas de conséquence quant à la position d'un autre volet de distribution d'air 23 associé à une autre sortie d'air 7 associée à un aérateur 8 agencé dans une autre partie ou zone de l'habitacle par exemple non exposée au soleil. De même, le déplacement du volet de répartition 19 n'entraine pas de conséquence quant à la position d'un autre volet de répartition 19 associé à une autre sortie d'air 7.

Enfin, selon ce deuxième mode de réalisation, l'entraînement du volet de distribution d'air 23 et du volet de répartition 19 associés à une sortie d'air 7 et donc à une zone de l'habitacle, peut se faire de façon conjointe selon une cinématique liant les deux volets non détaillée par la suite, ou en variante de façon dissociée et indépendante.

### Troisième mode de réalisation

Un troisième mode de réalisation est illustré sur la figure 5. La description des premier et deuxième modes de réalisation en référence aux figures 1 à 4c s'applique aux composants identiques. Les différences du troisième mode de réalisation par rapport aux modes de réalisation précédemment décrits sont maintenant détaillées.

Selon l'exemple illustré sur la figure 5, le dispositif de rafraichissement d'air 1 comporte deux premières canalisations 91 et 92, respectivement associées à une deuxième canalisation 151, 152. Dans ce troisième mode de réalisation, la configuration du dispositif de rafraichissement d'air 1 diffère notamment des autres modes par le fait qu'il comprend un conduit d'entrainement 125 d'un flux d'air présentant :
- une première ramification 127 se divisant pour former les deux premières canalisations 91 et 92, et
- une deuxième ramification 129 se divisant pour former les deux deuxièmes canalisations 151 et 152.

En outre, dans ce troisième mode de réalisation, un seul volet de répartition 119 permet de réguler le débit du premier flux d'air *F1* chargé en gouttelettes de liquide nébulisé dans au moins deux premières canalisations 91, 92. Pour ce faire, au moins un volet de répartition 119, et dans l'exemple illustré un seul volet de répartition 119, est agencé à la jonction des deux canalisations de nébulisation 91 et 92. Contrairement aux premier et deuxième modes de réalisation dans lesquels au moins un volet de répartition 19 est prévu pour chaque canalisation de nébulisation 9, dans ce troisième mode de réalisation c'est un même volet de répartition 119 qui permet de gérer le premier flux d'air *F1* pour deux canalisations de nébulisation 91 et 92, et donc à destination de deux sorties d'air 7 distinctes. Autrement dit, le volet de répartition 119 est agencé de manière à répartir le premier flux d'air *F1* circulant dans la première ramification 127 entre les deux premières canalisations 91 et 92 respectivement associées à une sortie d'air 7 propre.

Ce volet de répartition 119 est agencé mobile entre deux positions extrêmes de fermeture de l'une ou l'autre des canalisations de nébulisation 91, 92. Autrement dit, dans une première position extrême le volet de répartition 119 bloque le passage du premier flux d'air *F1* dans la canalisation de nébulisation 91 et autorise le passage du premier flux d'air *F1* dans l'autre canalisation de nébulisation 92. À l'inverse, dans sa deuxième position extrême, le volet de répartition 119 bloque le passage du premier flux d'air *F1* dans la canalisation de nébulisation 92 pour laquelle l'accès était précédemment autorisé, et autorise le passage du premier flux d'air *F1* dans la canalisation de nébulisation 91 pour laquelle l'accès était précédemment bloqué.

Bien entendu, le volet de répartition 119 peut prendre différentes positions intermédiaires entre ces deux positions extrêmes. Sur la figure 5, le volet de répartition 119 est illustré de façon schématique dans une position intermédiaire. Le volet de répartition 119 peut ainsi répartir le premier flux d'air *F1* chargé en gouttelettes de liquide nébulisé à destination de chaque sortie d'air 7 associée à une canalisation de nébulisation 91, 92.

De façon similaire aux autres modes de réalisation, selon ce troisième mode de réalisation, les premier *F1* et deuxième *F2* flux d'air sont avantageusement mis en mouvement par un organe de propulsion d'air commun 13 tel que décrit précédemment. Le conduit d'entrainement 125 d'air est ici raccordé à l'organe de propulsion d'air commun 13. On prévoit alors un volet de distribution d'air 123 permettant de répartir le premier flux d'air *F1* et le deuxième flux d'air *F2*. En particulier, le volet de distribution d'air 123 est agencé entre la première ramification 127 et la deuxième ramification 129 du conduit d'entrainement d'air 125. Cet agencement permet au volet de distribution d'air 123 de séparer le flux d'air en provenance de l'organe de propulsion d'air commun 13 entre :
- un premier flux d'air *F1* à destination de la première ramification 127 qui sera par la suite séparé de nouveau pour circuler dans les canalisations de nébulisation 91 et 92, et
- un deuxième flux d'air *F2* à destination de la deuxième ramification 129 qui sera par la suite séparé de nouveau pour circuler dans les deuxièmes canalisations 151 et 152.

Contrairement au deuxième mode de réalisation prévoyant un volet de distribution d'air 23 distinct pour chaque sortie d'air 7, dans ce troisième mode de réalisation c'est un même volet de distribution d'air 123 qui permet de gérer la répartition entre le premier flux d'air *F1* à destination des premières canalisations 91 et 92 via la première ramification 127 et le deuxième flux d'air *F2* à destination des deuxièmes canalisations 151 et 152 via la deuxième ramification 129.

Enfin, dans ce troisième mode de réalisation, un volet supplémentaire de répartition d'air 131 peut être agencé de manière à répartir le deuxième flux d'air *F2* circulant dans la deuxième ramification 129 entre les deuxièmes canalisations 151 et 152 respectivement associées à une sortie d'air 7 propre.

À cet effet, le volet supplémentaire de répartition d'air 131 est agencé mobile à la jonction entre les deux deuxièmes canalisations 151 et 152 entre deux positions extrêmes de fermeture de l'une ou l'autre des deuxièmes canalisations 151, 152. Autrement dit, dans une première position extrême le volet supplémentaire de répartition d'air 131 bloque le passage du deuxième flux d'air *F2* dans la deuxième canalisation 151 et autorise le passage du deuxième flux d'air *F2* dans l'autre deuxième canalisation 152. À l'inverse, dans sa deuxième position extrême, le volet supplémentaire de répartition d'air 131 bloque le passage du deuxième flux d'air *F2* dans la deuxième canalisation 152 pour laquelle l'accès était précédemment autorisé, et autorise le passage du deuxième flux d'air *F2* dans la deuxième canalisation 151 pour laquelle l'accès était précédemment bloqué.

Bien entendu, le volet supplémentaire de répartition d'air 131 peut prendre différentes positions intermédiaires entre ces deux positions extrêmes. Sur la figure 5, le volet supplémentaire de répartition d'air 131 est illustré de façon schématique dans une position intermédiaire. Le volet supplémentaire de répartition d'air 131 peut ainsi répartir le deuxième flux d'air *F2* à destination de chaque sortie d'air 7 associée à une deuxième canalisation 151, 152.

Ainsi, en agençant, un volet de répartition 19 dans chaque canalisation de nébulisation 9 selon les premier et deuxième mode de réalisation pour gérer le flux de nébulisation de chaque zone de l'habitacle, ou en agençant un seul volet de répartition 119 pour gérer le flux de nébulisation dans deux zones de l'habitacle comme décrit en référence au troisième mode de réalisation, la quantité de liquide nébulisé peut être régulé pour chaque zone de l'habitacle soit en fonction d'une commande de l'utilisateur soit de façon automatique, voire avec un pilotage à la fois manuel et automatique.

En rajoutant au moins un autre volet cette fois de distribution d'air 23 ; 123 éventuellement combiné à l'action d'un volet de répartition 131 du deuxième flux d'air *F2,* cela permet en plus d'adapter le volume d'air circulant dans les premières 9 ; 91, 92 et deuxièmes 15 ; 151, 152 canalisations pour chaque zone de l'habitacle.

## Revendications

1. Dispositif de rafraichissement d'air (1) pour véhicule notamment automobile, comprenant :
- au moins une réserve (3) de liquide,
- au moins un dispositif de nébulisation (5) du liquide sous forme de gouttelettes,
- au moins deux sorties d'air (7) respectivement configurées pour la diffusion d'au moins un flux d'air (*F1, F2*) à destination de l'habitacle dudit véhicule, et
- au moins deux canalisations de nébulisation ( 91, 92) respectivement destinées à être parcourues par un flux d'air (*F1*) chargé en gouttelettes de liquide nébulisé, chaque canalisation de nébulisation ( 91, 92) étant agencée en communication fluidique avec la réserve (3) de liquide et avec une sortie d'air (7) associée, le dispositif de rafraichissement d'air (1) comporte en outre au moins un organe de régulation de nébulisation (119) configuré pour réguler le débit du flux d'air (*F1*) chargé en gouttelettes de liquide nébulisé, destiné à parcourir une canalisation de nébulisation (91, 92) et à être diffusé à travers la sortie d'air (7) associée à cette canalisation de nébulisation (91, 92), **caractérisé en ce que** l'organe de régulation de nébulisation (119) est réalisé sous forme d'un volet de répartition (119) agencé à la jonction de deux canalisations de nébulisation (91, 92) de façon mobile entre deux positions extrêmes de fermeture de l'une ou l'autre des canalisations de nébulisation (91, 92), de manière à répartir le flux d'air (*F1*) chargé en gouttelettes de liquide nébulisé à destination de chaque sortie d'air (7) associée à une canalisation de nébulisation (91, 92).

2. Dispositif de rafraichissement d'air (1) selon la revendication précédente, dans lequel l'organe de régulation de nébulisation (119) est agencé en aval du dispositif de nébulisation (5) selon le sens d'écoulement du flux d'air (*F1*) chargé en gouttelettes de liquide nébulisé.

3. Dispositif de rafraichissement d'air (1) selon l'une quelconque des revendications précédentes,
- comprenant :
• au moins deux premières canalisations ( 91, 92) formant les canalisations de nébulisation destinées à être parcourues par un premier flux d'air (*F1*), et
• au moins deux deuxièmes canalisations (151, 152) respectivement destinées à être parcourues par un deuxième flux d'air (F2) distinct du premier flux d'air (*F1*), et
- dans lequel chaque deuxième canalisation (151, 152) est associée à une première canalisation ( 91, 92) respective et est agencée en communication fluidique avec une sortie d'air (7) respective.

4. Dispositif de rafraichissement selon la revendication précédente, dans lequel chaque première canalisation ( 91, 92) est disposée au moins partiellement à l'intérieur d'une deuxième canalisation (151, 152) associée.

5. Dispositif de rafraichissement d'air (1) selon l'une quelconque des revendications 3 ou 4, dans lequel le premier flux d'air (*F1*) et le deuxième flux d'air (*F2*) sont destinés à être mis en mouvement par un organe de propulsion d'air (13) commun du dispositif de rafraichissement d'air (1) ou d'une installation de chauffage, de ventilation et/ou de climatisation configurée pour équiper ledit véhicule.

6. Dispositif de rafraichissement d'air (1) selon la revendication précédente, comportant au moins un volet de distribution d'air ( 123) agencé mobile de manière à répartir le débit d'air entre le premier flux d'air (*F1*) et le deuxième flux d'air (*F2*).

7. Dispositif de rafraichissement d'air (1) selon l'une quelconque des revendications précédentes, comprenant un conduit d'entraînement (125) d'un flux d'air, le conduit d'entrainement (125) présentant :
- une première ramification (127) se divisant en au moins deux premières canalisations (91, 92), et
- une deuxième ramification (129) se divisant en au moins deux deuxièmes canalisations (151, 152).

8. Dispositif de rafraichissement d'air (1) selon la revendication précédente prise en combinaison avec la revendication 6, dans lequel le volet de distribution d'air (123) est agencé entre la première ramification (127) et la deuxième ramification (129) du conduit d'entrainement (125), de manière à répartir le premier flux d'air (*F1*) à destination des premières canalisations (91, 92) via la première ramification (127) et le deuxième flux d'air (F2) à destination des deuxièmes canalisations (151, 152) via la deuxième ramification (129).

9. Dispositif de rafraichissement d'air (1) selon la revendication 7 ou 8, comportant un volet supplémentaire de répartition d'air (131) agencé mobile à la jonction entre les deux deuxièmes canalisations (151, 152) entre deux positions extrêmes de fermeture de l'une ou l'autre des deuxièmes canalisations (151, 152), de manière à répartir le deuxième flux d'air (*F2*) circulant dans la deuxième ramification (129) entre les deuxièmes canalisations (151, 152) respectivement associées à une sortie d'air distincte (7).

10. Installation de chauffage, de ventilation et/ou de climatisation comprenant un dispositif de rafraîchissement d'air (1) selon l'une quelconque des revendications précédentes.

## Patentansprüche

1. Luftkühlvorrichtung (1) für ein Fahrzeug, insbesondere ein Kraftfahrzeug, umfassend:
- wenigstens eine Flüssigkeitsreserve (3),
- wenigstens eine Vorrichtung zur Zerstäubung (5) der Flüssigkeit in Form von Tröpfchen,
- wenigstens zwei Luftdüsen (7), die jeweils für das Ausströmen wenigstens eines Luftstroms (*F1, F2)* in den Innenraum des Fahrzeugs ausgelegt sind, und
- wenigstens zwei Zerstäubungsrohre (91, 92), die jeweils dazu bestimmt sind, von einem Luftstrom (*F1*) durchströmt zu werden, der mit Tröpfchen zerstäubter Flüssigkeit beladen ist, wobei jedes Zerstäubungsrohr (91, 92) in Fluidverbindung mit der Flüssigkeitsreserve (3) und mit einer zugeordneten Luftdüse (7) angeordnet ist,
wobei die Luftkühlvorrichtung (1) außerdem wenigstens ein Organ zur Zerstäubungsregelung (119) aufweist, das dafür ausgelegt ist, den Durchsatz des mit Tröpfchen zerstäubter Flüssigkeit beladenen Luftstroms (*F1*) zu regeln, der dazu bestimmt ist, ein Zerstäubungsrohr (91, 92) zu durchströmen und über die diesem Zerstäubungsrohr (91, 92) zugeordnete Luftdüse (7) verteilt zu werden,
**dadurch gekennzeichnet, dass** das Organ zur Zerstäubungsregelung (119) in Form einer Verteilungsklappe (119) hergestellt ist, die an der Verbindungsstelle von zwei Zerstäubungsrohren (91, 92) beweglich zwischen zwei extremen Positionen des Schließens des einen oder des anderen der Zerstäubungsrohre (91, 92) angeordnet ist, um so den mit Tröpfchen zerstäubter Flüssigkeit beladenen Luftstrom (*F1*) auf die jeweils einem Zerstäubungsrohr (91, 92) zugeordneten Luftdüsen (7) zu verteilen.

2. Luftkühlvorrichtung (1) nach dem vorhergehenden Anspruch, wobei das Organ zur Zerstäubungsregelung (119), in der Fließrichtung des mit Tröpfchen zerstäubter Flüssigkeit beladenen Luftstroms (*F1*) gesehen, stromabwärts der Zerstäubungsvorrichtung (5) angeordnet ist.

3. Luftkühlvorrichtung (1) nach einem der vorhergehenden Ansprüche,
- welche umfasst:
▪ wenigstens zwei erste Rohre (91, 92), welche die Zerstäubungsrohre bilden, die dazu bestimmt sind, von einem ersten Luftstrom (*F1*) durchströmt zu werden, und
▪ wenigstens zwei zweite Rohre (151, 152), die jeweils dazu bestimmt sind, von einem zweiten Luftstrom (F2) durchströmt zu werden, der von dem ersten Luftstrom (*F1*) verschieden ist, und
- wobei jedes zweite Rohr (151, 152) einem jeweiligen ersten Rohr (91, 92) zugeordnet ist und in Fluidverbindung mit einer jeweiligen Luftdüse (7) angeordnet ist.

4. Luftkühlvorrichtung nach dem vorhergehenden Anspruch, wobei jedes erste Rohr (91, 92) wenigstens teilweise im Inneren eines zugeordneten zweiten Rohres (151, 152) angeordnet ist.

5. Luftkühlvorrichtung (1) nach einem der Ansprüche 3 oder 4, wobei der erste Luftstrom (*F1*) und der zweite Luftstrom (*F2*) dazu bestimmt sind, von einem gemeinsamen Luftantriebsorgan (13) der Luftkühlvorrichtung (1) oder einer Heizungs-, Lüftungs- und/oder Klimaanlage, die dafür ausgelegt ist, in dem Fahrzeug eingesetzt zu werden, in Bewegung versetzt zu werden.

6. Luftkühlvorrichtung (1) nach dem vorhergehenden Anspruch, welche wenigstens eine Luftverteilungsklappe (123) aufweist, die beweglich angeordnet ist, um den Luftdurchsatz zwischen dem ersten Luftstrom (*F1*) und dem zweiten Luftstrom (*F2*) aufzuteilen.

7. Luftkühlvorrichtung (1) nach einem der vorhergehenden Ansprüche, welche einen Antriebskanal (125) eines Luftstroms umfasst, wobei der Antriebskanal (125) aufweist:
- einen ersten Zweig (127), der sich in wenigstens zwei erste Rohre (91, 92) teilt, und
- einen zweiten Zweig (129), der sich in wenigstens zwei zweite Rohre (151, 152) teilt.

8. Luftkühlvorrichtung (1) nach dem vorhergehenden Anspruch in Kombination mit Anspruch 6, wobei die Luftverteilungsklappe (123) zwischen dem ersten Zweig (127) und dem zweiten Zweig (129) des Antriebskanals (125) angeordnet ist, um eine Aufteilung in den ersten Luftstrom (*F1*) zu den ersten Rohren (91, 92) über den ersten Zweig (127) und den zweiten Luftstrom *(F2)* zu den zweiten Rohren (151, 152) über den zweiten Zweig (129) zu bewirken.

9. Luftkühlvorrichtung (1) nach Anspruch 7 oder 8, welche eine zusätzliche Luftverteilungsklappe (131) aufweist, die an der Verbindungsstelle zwischen den zwei zweiten Rohren (151, 152) beweglich zwischen zwei extremen Positionen des Schließens des einen oder des anderen der zweiten Rohre (151, 152) angeordnet ist, um so den in dem zweiten Zweig (129) strömenden zweiten Luftstrom (*F2*) zwischen den jeweils einer anderen Luftdüse (7) zugeordneten zweiten Rohren (151, 152) aufzuteilen.

10. Heizungs-, Lüftungs- und/oder Klimaanlage, welche eine Luftkühlvorrichtung (1) nach einem der vorhergehenden Ansprüche umfasst.

## Claims

1. Air cooling device (1) for a vehicle, in particular a motor vehicle, comprising:
at least one liquid reserve (3);
at least one device (5) for nebulizing the liquid in the form of droplets;
at least two air outlets (7) respectively configured for diffusing at least one air flow (F1, F2) intended for the interior of said vehicle; and
at least two nebulizing pipes (91, 92) respectively intended to be passed through by an air flow (F1) laden with droplets of nebulized liquid, each nebulizing pipe (91, 92) being arranged so as to be fluidically connected to the liquid reserve (3) and to an associated air outlet (7),
the air cooling device (1) also having at least one nebulization regulating member (119) configured to regulate the flow rate of the air flow (F1) laden with droplets of nebulized liquid that is intended to pass through a nebulizing pipe (91, 92) and to be diffused through the air outlet (7) associated with this nebulizing pipe (91, 92), **characterized in that** the nebulization regulating member (119) is realized in the form of a distribution flap (119) arranged at the junction of two nebulizing pipes (91, 92) so as to be able to move between two end positions for closing one or the other of the nebulizing pipes (91, 92), so as to distribute the air flow (F1) laden with droplets of nebulized liquid intended for each air outlet (7) associated with a nebulizing pipe (91, 92).

2. Air cooling device (1) according to the preceding claim, wherein the nebulization regulating member (119) is arranged downstream of the nebulizing device (5) in the direction of flow of the air flow (F1) laden with droplets of nebulized liquid.

3. Air cooling device (1) according to either of the preceding claims,
- comprising:
- at least two first pipes (91, 92) forming the nebulizing pipes intended to be passed through by a first air flow (F1); and
- at least two second pipes (151, 152) respectively intended to be passed through by a second air flow (F2) separate from the first air flow (F1); and
- wherein each second pipe (151, 152) is associated with a respective first pipe (91, 92) and is arranged so as to be fluidically connected to a respective air outlet (7).

4. Cooling device according to the preceding claim, wherein each first pipe (91, 92) is disposed at least partially inside an associated second pipe (151, 152).

5. Air cooling device (1) as claimed in either one of Claims 3 and 4, wherein the first air flow (F1) and the second air flow (F2) are intended to be set into motion by a common air propulsion member (13) of the air cooling device (1) or of a heating, ventilation and/or air-conditioning installation configured to equip said vehicle.

6. Air cooling device (1) according to the preceding claim, having at least one air distribution flap (123) arranged in a movable manner so as to distribute the air flow rate between the first air flow (F1) and the second air flow (F2).

7. Air cooling device (1) according to any one of the preceding claims, comprising an air flow feed duct (125), the feed duct (125) having:
- a first branch (127) that divides into at least two first pipes (91, 92); and
- a second branch (129) that divides into at least two second pipes (151, 152).

8. Air cooling device (1) according to the preceding claim in combination with Claim 6, wherein the air distribution flap (123) is arranged between the first branch (127) and the second branch (129) of the feed duct (125) so as to distribute the first air flow (F1) intended for the first pipes (91, 92) via the first branch (127) and the second air flow (F2) intended for the second pipes (151, 152) via the second branch (129).

9. Air cooling device (1) according to Claim 7 or 8, having an additional air distribution flap (131) arranged in a movable manner at the junction between the two second pipes (151, 152) between two end positions for closing one or the other of the second pipes (151, 152), so as to distribute the second air flow (F2) circulating in the second branch (129) between the second pipes (151, 152) respectively associated with a separate air outlet (7).

10. Heating, ventilation and/or air-conditioning installation comprising an air cooling device (1) according to any one of the preceding claims.
